# EUROPEAN PATENT SPECIFICATION

(11) **EP 0 587 199 B1**
(45) Date of publication and mention of the grant of the patent: **20.10.1999**
(21) Application number: 93118487.3
(22) Date of filing: 22.01.1990
(51) Int. Cl.: H01M 6/14, H01M 2/16, H01M 4/62, H01M 4/66

(54) **A nonaqueous electrochemical cell and a method of manufacturing the same**
Nichtwässrige elektrochemische Zelle und Verfahren zu deren Herstellung
Pile électrochimique non aqueuse et procédé de fabrication d'une telle pile

(30) Priority: 24.01.1989 JP 534289; 30.11.1989 JP 31114589
(43) Date of publication of application: 16.03.1994
(62) Divisional of application: 90300611.2
(73) Proprietor: MATSUSHITA ELECTRIC INDUSTRIAL CO., LTD., Kadoma-shi, Osaka-fu, 571 (JP)
(72) Inventor: Morigaki, Kenichi, Nishinomiya-shi, Hyogo-ken (JP); Kobayashi, Shigeo, Yawata-shi, Kyoto-fu (JP); Fukuda, Hiroshi, Suita-shi, Osaka-fu (JP); Nishino, Shuichi, Hirakata-shi, Osaka-fu (JP); Mitamura, Tomokazu, Neyagawa-shi, Osaka-fu (JP)
(74) Representative: Crawford, Andrew Birkby

(56) References cited:
- EP-A- 0 219 063
- EP-A- 0 296 589
- US-A- 3 103 461
- PATENT ABSTRACTS OF JAPAN vol. 005 no. 086 (E-060) ,5 June 1981 & JP-A-56 032677 (TOSHIBA BATTERY CO LTD) 2 April 1981,
- PATENT ABSTRACTS OF JAPAN vol. 10 no. 99 (E-396) & JP-A-60 240060 (TOSHIBA KK)
- PATENT ABSTRACTS OF JAPAN vol. 12 no. 118 (E-600) & JP-A-62 246254 (TOSHIBA BATTERY CO LTD)

## Description

The present invention relates to a nonaqueous electrochemical cell comprising an alkali metal, such as metallic lithium, as an anode active substance, an oxyhalide or the like which is liquid at ambient temperature as a cathodic active substance-electrolyte solvent, and a porous carbonaceous element as a cathode collector.

In a nonaqueous electrochemical cell comprising an alkali metal, such as metallic lithium, as an anode active substance, an oxyhalide or the like which is liquid at ambient temperature as a cathodic active substance-electrolyte solvent, and a porous carbonaceous element as a cathode collector, the anode active substance and the cathode active substance are directly contacted with each other so that a discharge reaction product is formed on their interface by self-discharge. This discharge reaction product forms a progressively growing film on the surface of the anode active substance, such as metallic lithium, but as this film increases in thickness, it functions as a protective or passivating film preventing direct contact of the cathode active substance and anode active substance to prevent a loss of capacity due to self-discharge of the cell and any further film growth is also arrested. However, such a film formed on the surface of the anode acts as resistance component in discharge of the cell to cause a large voltage drop in the initial stage of large current discharge. This marked voltage drop occurring in the initial stage of discharge is known as voltage delay.

To diminish this voltage delay in a cell using a liquid cathodic active substance such as an oxyhalide, it has been proposed to add a variety of additives to the liquid cathode-electrolyte system. Among these additives are high molecular materials such as polyvinyl chloride (United States Patent 3,993,501), alkyl 2-cyanoacrylates (USP 4,402,995) and chlorinated polypropylene (JP-A 60-249253; JP-A means Japanese Patent Laid-Open Application) and inorganic materials such as Li₂O (USP 4,228,229), Li₂B₁₀Cl₁₀ (USP 4,071,664) and SeO₂ (JP-A 62-43069). With regard to methods of incorporation of such additives, addition to the active substance-electrolyte solution (USP 4,277,545), formation of a vinyl polymer film on the anode (USP 3,993,501), formation of a vinyl polymer film on the separator (USP 4,278,741) and formation of a vinyl polymer film on the porous carbonaceous cathode collector (USP 4,560,632) have been proposed and claimed to be practically successful.

In order to assure an effective utilization of the liquid cathode-electrolyte, the porous carbonaceous cathode collector which functions as the site of discharge reaction and the separator isolating the anode from the cathode must respectively have a sufficient porosity to assure a stable retention of the liquid cathode-electrolyte. Taking the carbonaceous cathode collector as an example, its porosity is preferably 82% (USP 4,228,229) or 80 to 90% (JP-A 59-171467). With regard to the separator, the preferred porosity is said to be 50 to 75% or it may be a glass fibre separator containing 91 to 94 weight % of glass fibre (USP 4,421,834). The use of an acrylic resin has also been proposed to implement a separator of improved mechanical strength (JP-A 61-16465).

European Patent Application EP-A-0219190 discloses a polymeric component for use as a separator in an electrochemical device in which the anode comprises lithium, the component comprising a thermoplastic polymer, a tertiary plasticiser and a filler that comprises a lithium compound which is substantially insoluble in both the polymer and the plasticiser. Useful polymers listed in this disclosure include polyethylene terephthalate. The technologies of incorporating various additives in the liquid cathode-electrolyte are disadvantageous in that some involve complicated assembling procedures, others tend to detract from environmental safety and still others entail increased production costs. Furthermore the cells so fabricated may normally function fairly well but at high ambient temperatures or in an early stage of large-current discharge, they show a voltage drop, known as voltage delay, so that these cells are not sufficiently useful for practical purposes.

Furthermore, in order to assure an effective utilization of the liquid cathode-electrolyte, it is essential to use a highly porous carbonaceous cathode collector and a glass fiber separator rich in porosity and glass component. This means that both the cathode collector and separator are not sturdy enough, thus causing troubles in the fabrication of cells.

It is an object of the present invention to provide a nonaqueous electrochemical cell with a minimum of voltage delay even at a high ambient temperature or on prolonged storage.

It is a further object of the invention to provide a nonaqueous electrochemical cell which overcomes the disadvantages, in terms of mechanical strength, of the highly porous carbonaceous cathode collector and glass fiber separator necessary for effective utilization of a liquid cathode-electrolyte and which can be fabricated with high reproducibility and at low cost.

The above-mentioned objects are accomplished by the present invention, which comprises employing polyethylene terephthalate as an essential additive for suppressing the voltage delay in a nonaqueous electrochemical cell.

The addition of polyethylene terephthalate (PET) can be accomplished by addition to the liquid cathode-electrolyte. This is the subject of European Patent Application EP-A-90300611.2, of which the present application is a divisional application. The present invention concerns the addition of polyethylene terephthalate to the porous carbonaceous cathode collector or the glass fibre separator of such electrochemical cells. By virtue of the use of PET as an additive to, rather than as a main component of the separator, or as an additive to the carbonaceous cathode-collector the previously undisclosed and advantageous lowering of voltage delay can be realised. In addition to this advantage, the mechanical strength of the collector or the separator can be enhanced and the internal short-circuit of the cell due to breakage of the separator or chipping of the porous carbonaceous cathode collector in the fabrication of the cell can be prevented.

According to the present invention, there is provided a nonaqueous electrochemical cell comprising an alkali metal anode, a glass fibre separator, a liquid cathode-electrolyte and a porous carbonaceous cathode collector, characterised in that said glass fibre separator or said cathode collector contain polyethylene terephthalate as an additive, and in that said liquid cathode-electrolyte contains 0.01 to 0.5 weight percent of polyvinylchloride.

According to the present invention, there is further provided a method of manufacturing a nonaqueous electrochemical cell consisting generally of an alkali metal anode, a glass fibre separator, a liquid cathode-electrolyte and a porous carbonaceous cathode collector, characterised in that said method either includes a step of incorporating 1 to 30 g/m² of polyethelene terephthalate in said glass fibre separator or includes a step of incorporating polyethylene terephthalate in said porous carbonaceous cathode collector in a proportion of 1 to 10 weight percent of the total weight of the cathode; and in that said method includes a step of adding 0.01 to 0.5 weight percent of polyvinyl chloride to the liquid cathode-electrolyte.

The term "separator" as used herein means not only a cylindrical body as such but also the member at the top or bottom thereof which serves to hold the porous carbonaceous cathode collector in isolation from the lithium anode and the cell housing.

By these innovations briefly mentioned above, the inventors provided a nonaqueous electrochemical cell showing a minimum of voltage delay even at a high ambient temperature or an prolonged storage.

Furthermore, even with a sufficient porosity to assure an effective utilization of the liquid cathode-electrolyte, it is by now possible to provide a glass fiber separator and a porous carbonaceous collector both having sufficient mechanical strength.

One theory about the rationale of addition of a high polymer additive for inhibiting the voltage delay in association with the use of a liquid cathode active substance such as an oxyhalide is shown in the paper of J.W. Boyd which discusses on the effect of polyvinyl chloride on the film growth and voltage delay in the thionyl chloride (SOCl₂) electrolyte system (J. Electrochem. Soc. 134, 18-24, 1987). According to the author, the beneficial effect of polyvinyl chloride on passivation on the lithium surface in 1.5 moles/ℓ LiAlCl₄-SOCl₂ solution is said to result from the following two effects of PVC.
1) As the lithium surface is coated with a vinyl polymer, the coating serves as a spacer between lithium (Li) and lithium chloride (LiCl) films so that the LiCl film becomes easier to be broken as the current flows.
2) As the vinyl polymer is deposited on LiCl crystals, normal crystal growth is hindered to form large pores and tunnels, thus facilitating ion conduction.

Polyethylene terephthalate (PET) is a polymer of the formula (1) 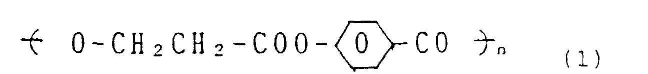 and, as such, differs from polyvinyl chloride (PVC) of the formula (2) 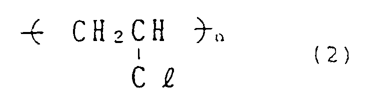 However, it is probable that the lithium surface is coated with PET in a similar manner to what happens with PVC. The mechanism of deposition or binding of PVC on the Li surface remains to be elucidated but if the contribution of the C-Cl bond is postulated, the presence of carbonyl (〉C=O) and carboxyl residue (COO) in PET, too, suggests the deposition or binding of PET on the Li surface by the same mechanism. For example, assuming that the electronegativity of a substituent is a factor, it is 0.21 in the case of (C-Cl) and 0.42, or about two-fold higher, for (C=O). (Minoru Imoto: Organic Electron Theory 1, Kyoritsu Zensho 55, Kyoritsu Shuppan, Japan, p29-32 (1955)).

However, the fact that the concomitant presence of PET and PVC results in a marked inhibition of voltage delay suggests that the effect of PET is different from that of PVC. A possible explanation of the effect of PET is the effect 1) proposed by Boyd, that is the covering of the Li surface. On the other hand, the effect of PVC may be the effect 2), that is deposition on LiCl crystals which inhibits the growth of LiCl crystals.

Furthermore, both PET and PVC are dissolved in an oxyhalide such as thionyl chloride as colloidal polymers in the cell but when their concentrations are high, they adhere not only to the Li surface but to the surfaces of the porous carbonaceous cathode collector and separator to function as resistance factors contributing to a voltage drop in discharge. Therefore, the upper limit of addition is preferably 3.0 weight % for PET and 0.5 weight % for PVC.

Therefore, when they are dissolved in the liquid cathode-electrolyte, the preferred concentration range of PET is 0.01 to 3.0 weight % and that of PVC is 0.01 to 0.5 weight %. If the concentration of either additive is less than 0.01 weight %, the desired effect cannot be fully accomplished.

When PET is incorporated in the glass fiber separator, the preferred range of addition per unit area of the separator is 1 to 30 g/m². When the additive is to be incorporated in the porous carbonaceous cathode collector, the preferred range is 1 to 10 weight % based on the total weight of the cathode. When PET is incorporated in the separator and/or the porous carbonaceous cathode collector, the PET first dissolves within the cell and, then, acts on the Li surface and, therefore, the minimum requirement is increased as compared with addition to the electrolyte. Moreover, when PET is used in a large amount as the binder, dissolution of PET within the cell leads to a decrease in mechanical strength so that in the case of addition to the porous carbonaceous collector, for instance, the molded collector tends to be cracked or chipped to detract from its collector function and, hence, a decrease in discharge capacity. In the case of addition to the separator, too, the separator becomes liable to be broken and the resulting internal micro-short-circuits leads to a decreased discharge capacity.

A disadvantage of addition of PET to the liquid cathode active substance, which is particularly pronounced when the PET concentration is high, is that this polymer is liable to be precipitated within the piping system used in the filling process to cause system clogging and other troubles or a fluctuation in filling volume. On the other hand, in the ease of the separator and porous carbonaceous cathode collector manufactured without PET, since both are inherently high in porosity and low in mechanical strength, breakage or chipping tends to occur in cell assembling to increase the incidence of rejects.

Therefore, the incorporation of PET in the separator or the porous carbonaceous cathode collector serves to increase their mechanical strength to reduce the incidence of rejects in the fabrication of cells and contributes to a marked improvement in filling uniformity. Which of the separator and the porous carbonaceous cathode collector is to be chosen for incorporation of PET depends on their relative mechanical strength as well as the manufacturing method adopted but in view of its geometrical proximity to the anode surface, the separator is the better choice. The incorporation of PET in the porous carbonaceous cathode collector also serves to increase the collector porosity due to the pores left behind after dissolution of PET to thereby improve the discharge efficiency. In addition, the incorporation of PET in the separator or the porous carbonaceous cathode collector contributes to a reduced incidence of rejects in cell assembling but requires additional steps for adding PET, washing and drying, thus complicating the manufacturing process and, hence, resulting in an industrial disadvantage. Furthermore, the use of PET as an exclusive binder leads to a marked reduction of strength after release of PET within the cell so that the normal discharge function cannot be obtained. Therefore, it is sometimes advisable to use PET in combination with a different binder in the fabrication of the porous carbonaceous cathode collector. The acrylic resin which is the common binder for the glass fiber separator is resistant to the electrolyte but is not much effective in improving the mechanical strength of the separator. Therefore, a separator satisfactory in cell characteristics and manufacturing technology can be provided by using PET and an acrylic resin in the optimum ratio of 1:0.5 to 1.5. In the case of the porous carbonaceous cathode collector, too, the use of PET in combination with polytetrafluoroethylene (PTFE), which is one of the common binders, results in improved mechanical strength of the cathode and improved porosity due to formation of effective pores in the collector. However, the release of PET within the cell causes a decrease in the mechanical strength of the porous carbonaceous cathode collector. Therefore, the use of PET in a large proportion may adversely affect the cell characteristic. Therefore, the optimum proportion of PET is 1 to 10 weight % of the total cathode weight. Similarly, polytetrafluoroethylene (PTFE), when used in combination with PET, assures sufficient strength even in a small amount but in view of the balance between mechanical strength and effective pore volume, the optimum proportion of PTFE is 5 to 20 weight % of the total cathode weight.

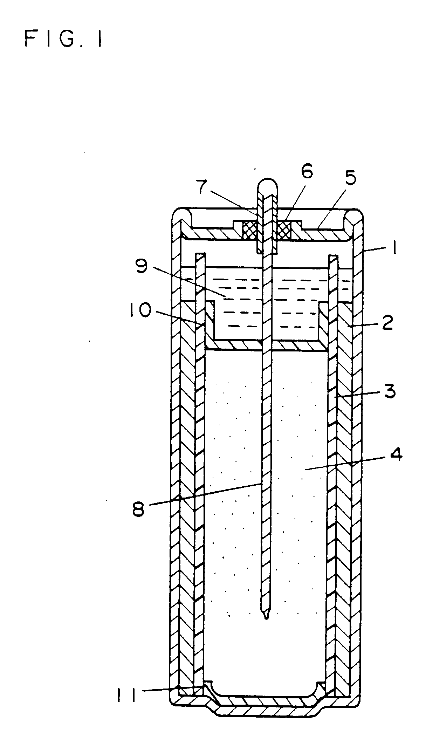

Fig. 1 is a cross-section view showing a nonaqueous electrochemical cell which is characteristic of the embodiments of the present invention.

Comparative Examples 1 and 2, and Examples 1 to 4 which are embodiments of the invention, are described below, taking a thionyl chloride-lithium cell as an example and referring to the accompanying drawing. Comparative Examples 1 and 2 are included in order to demonstrate the advantage of the embodiments of the invention over Comparative Examples 1 and 2, which do not contain PET in either the separator or the cathode-collector. Further comparative examples are described later.

### Comparative Example 1

Referring Fig. 1 which is a cross-section view showing a bobbin-shaped thionyl chloride-lithium electrochemical cell, the reference numeral 1 represents a stainless steel cell housing which serves as an anode terminal, and 2 represents a cylindrical metallic lithium element measuring 0.85 mm thick, 37 mm long and 37 mm wide and fitted against the inner surface of said cell housing for functioning as an anode. The reference numeral 3 represents a glass fiber separator containing 15 weight % of an arylic resin binder and measuring 0.2 mm in thickness, and 4 represents a porous carbonaceous collector extrusion-molded from a well-kneaded mixture of 78 weight % acetylene black, 9 weight % artificial graphite, 13 weight % PTFE binder with water-ethanol and dried in vacuo at 150°C for 12 hours. The cathode is a cylinder, 10 mm in diameter and 30 mm high, with a porosity of 82%. Represented by the numeral 5 is a stainless steel cell cover, the peripheral edge thereof being laser-welded to the open end of said cell housing 1. Disposed in the center of said cell cover 5 is a hollow cathode terminal 7 insulated by glass wool 6. This cathode terminal 7 is laser-melded, at its top, to a nail-shaped cathode collector 8. Indicated at 9 is a liquid cathode-electrolyte. This liquid is prepared by dissolving lithium tetrachloroaluminate (LiAlCl₄) in thionyl chloride at a final electrolyte concentration of 1.2 moles/liter and adding polyethylene terephthalate (PET) at a concentration of 0.5 weight %. The volume of the cathode active substance-electrolyte solution is 4.0 ml.

The reference numerals 10 and 11 represent a top and a bottom separator, each made of the same glass fiber material as the separator 3.

### Comparative Example 2

An electrochemical cell was fabricated in the same manner as Example 1 except that a thionyl chloride solution containing 1.2 moles/l of LiAlCl₄, 0.5 weight % of PET and 0.1 weight % of polyvinyl chloride (PVC) was used as the liquid cathode-electrolyte.

### Example 1

As a first embodiment of the present invention, in 100 ml of o-chlorophenol was dissolved 5 g of PET by heating at 60-70°C. The same glass fiber separator as the one used in Comparative Example 1 was impregnated with the above PET solution for one hour and, then, washed thoroughly with ethanol to remove the o-chlorophenol. The separator was then dried in vacuo at 110°C to give a finished glass fiber separator with a PET content of about 12 g/m. In addition a thionyl chloride solution of 1.2 moles/ℓ of LiAlCl₄ supplemented with 0.1 weight % of PVC was used as a cathode-electrolyte solution. Using the PET separator and the PVC cathode-electrolyte solution, an electrochemical cell was then fabricated in otherwise the same manner as Comparative Example 1.

### Example 2

As a second embodiment of the present invention, except that a glass fibre separator impregnated with 15 weight % of PET and 15 weight % of an acrylic resin as binders was used, a finished glass fibre separator was prepared. Using this separator and the thionyl chloride electrolyte solution of Example 1, an electrochemical cell was fabricated in otherwise the same manner as Comparative Example 1.

### Example 3

As a third embodiment of the present invention, in 100 ml of dimethylformamide was dissolved 6g of PET by heating at 50-60°C. The same molded porous carbonaceous cathode collector as used in Comparative Example 1 was impregnated with the resulting PET solution and washed thoroughly with water and ethanol to remove the solvent dimethylformamide. The collector was then dried in vacuo to give a porous carbonaceous cathode collector with a PET content of about 6 weight %. With the exceptions that (1) the above carbonaceous collector was employed, and (2) the thionyl chloride electrolyte solution of Example 1 was used as the liquid cathode electrolyte, the same procedure of Comparative Example 1 was followed to fabricate an electrochemical cell.

### Example 4

As a fourth embodiment of the present invention a well-blended mixture of finely divided PET fiber, acetylene black and artificial graphite was kneaded with an aqueous dispersion of polytetrafluoroethylene (PTFE), ethanol and water and the resulting composition was extrusion-molded. The composition consisted of 76 weight % acetylene black, 8 weight % artificial graphite, 13 weight % PTFE and 3 weight % PET. The thus molded collector was then dried in vacuo at 150°C for 12 hours to give a finished porous carbonaceous cathode collector measuring 10 mm in diameter and 30 mm high. With the exceptions that (1) this cathode collector was used, and (2) the thionyl chloride electrolyte solution of Example 1 was used as the liquid cathode electrolyte, the procedure of Comparative Example 1 was repeated to fabricate an electrochemical cell.

For the purpose of showing further advantages of the present invention, the following additional comparative examples were also produced.

### Comparative Example 3

Using a solution 1.2 moles/ℓ LiAlCl₄ in thionyl chloride, an electrochemical cell was fabricated in the same manner as Comparative Example 1.

### Comparative Example 4

Using the thionyl chloride electrolyte solution containing 0.1 weight % of PVC prepared in the same manner as Example 1, an electrochemical cell was fabricated in the same manner as Comparative Example 1.

### Comparative Example 5

Using a binder-free glass fiber separator, an electrochemical cell was fabricated in otherwise the same manner as Comparative Example 3.

The electrochemical cells according to Examples 1 to 4 and Comparative Examples 1 to 5 were fabricated in 20 units each and the incidence of in-process rejects was investigated. The results are set forth in Table 1.

**Table 1**

| Comparative Example | Incidence of Rejects (%) | Example | Incidence of Rejects (%) |
|---|---|---|---|
| 1 | 5 | 1 | 0 |
| 2 | 25 | 2 | 0 |
| 3 | 10 | 3 | 0 |
| 4 | 15 | 4 | 0 |
| 5 | 60 | | |

In regard of the electrochemical cell of Comparative Example 2, filling troubles resulted in 5 rejects out of the 20 units. The other rejects were all attributable to breakage of the separator and chipping of the porous carbonacious cathode collector. In the case of the glass fiber separator of Comparative Example 5, the mechanical strength of the separator was too low to enable successful fabrication of a cell. It is clear that with the separator and porous carbonaceous cathode collector of the invention, which has been improved in mechanical strength, the incidence of rejects in cell assembly can be drastically reduced.

Then, the internal resistance of the cell was measured at 1 KHz for 10 wholesome units of the cells of Examples 1 to 4 and Comparative Example 1 to 4, excluding the cell of Comparative Example 5 which showed a very high incidence of rejects, one day and one week after fabrication. The minimum and maximum values are presented in Table 2. These units of the cells were also stored at 60°C for 20 days and the internal resistance of the cell was similarly measured. The results are also shown in Table 2. Furthermore, the cells showing a median internal resistance after the 20-day storage at 60°C were subjected to constant current discharge at 40 mA (20°C) and the minimum voltage in the initial stage of discharge (up to 50 msec) was measured. The results are also presented in Table 2.

**Table 2**

| Internal Resistance (min. value ∼ max. value ) / ohm: | One day after fabrication | One week after fabrication | After 20 days at 60°C | Lowest voltage / mV (20°C, 40mA discharge) (after 20 days at 60°C) |
|---|---|---|---|---|
| Example 1 | 5 ∼8 | 10 ∼ 12 | 22 ∼ 28 | 2820 |
| 2 | 5 ∼ 6 | 10 ∼ 13 | 24 ∼ 30 | 2898 |
| 3 | 10 ∼ 18 | 15 ∼ 22 | 28 ∼ 40 | 2854 |
| 4 | 12 ∼ 28 | 14 ∼ 30 | 31 ∼ 63 | 2398 |
| Comparative Example 1 | 9 ∼ 10 | 18 ∼ 24 | 34 ∼ 52 | 2608 |
| 2 | 5 ∼ 6 | 10 ∼ 15 | 19 ∼ 25 | 2927 |
| 3 | 27 ∼ 41 | 56 ∼ 70 | 100 ∼ 135 | 1285 |
| 4 | 9 ∼ 15 | 16 ∼ 25 | 35 ∼ 41 | 2244 |

It is apparent from Table 2 that the internal resistance of the cell is decreased by the presence of PVC. On the other hand, with PET alone, the internal resistance is equal to, or higher than, that found with PVC alone (Comparative Example 4) but about 1/2 of the internal resistance of the cell containing no additive (Comparative Example 3). When PET and PVC are used in combination, the internal resistance is further halved. In the case of Examples 3 and 4 where PET was incorporated in the porous carbonaceous cathode collector, the internal resistance values were slightly higher than the other examples, suggesting that the resistance is increased partly due to a time delay till PET is released from the porous carbonaceous cathode collector and acts on the lithium surface and partly due to deposition of PET on the separator and collector surfaces.

The voltage delay in the cells was evaluated by subjecting the cells after the 20-day storage at 60°C to a constant current discharge of 40 mA and measuring the lowest voltage in the initial stage of discharge (up to 50 msec). The data showed that all the cells of Examples 1 to 4 of the invention are superior to the cell of Comparative Example 4. As to Example 4 where PET fiber was incorporated as a binder in the porous carbonaceous cathode collector, the effects were less than those in the other Examples and the plausible reason for this difference is that PET in these porous carbonaceous cathode collectors are harder to be released into the electrolyte.

Based on the foregoing results, it is thought that the combined use of PET and PVC inhibits increase of cell internal resistance, i.e. an increase in thickness of the LiC 1 film, to minimize the voltage delay in large current discharge because of the composite effect of deposition of PET on the lithium or LiC 1 layer to make the LiC 1 layer liable to be destroyed and deposition of PVC on the crystal lattice of LiC1 to inhibit growth of LiC1 crystals.

The cells according to Examples 1 to 4 and those of Comparative Examples 1 to 4 were stored at 60°C for 20 days and then subjected to a discharge test using a constant discharge loading of 300 Ω at 20°C and the discharge time till a terminal voltage of 2.5 V was measured. The results are presented in Table 3.

**Table 3**

| Example | Discharge Time (H) | Comparative Example | Discharge Time (H) |
|---|---|---|---|
| 1 | 156 | 1 | 158 |
| 2 | 157 | 2 | 155 |
| 3 | 161 | 3 | 138 |
| 4 | 161 | 4 | 145 |

It is apparent from Table 3 that the electrochemical cells according to Examples 1 to 4 are invariably superior to those according to Comparative Examples 2 to 4. It is also clear that the cells according to Examples 3 and 4 in which PET was incorporated in the porous carbonaceous cathode collector give longer discharge times indicating improvements in discharge efficiency.

It should be understood that the method of incorporating PET is not limited to the one used in the examples but the use of other oxyhalides such as trifluoroacetic acid, concentrated sulfuric acid, thionyl chloride, etc. as solvents and the use of a thin film of PET as bonded by fusion also fall within the scope of the invention.

It should also be understood that although PET was incorporated selectively in the separator or the porous carbonaceous cathode collector, it is possible to incorporate PET in both of these members. The effects of the invention can also be implemented by using the PET-containing separator in combination with any other separator or incorporating PET only in the top separator and/or the bottom separator.

## Claims

1. A nonaqueous electrochemical cell comprising an alkali metal anode, a glass fibre separator, a liquid cathode-electrolyte and a porous carbonaceous cathode collector, characterised in that said glass fibre separator or said cathode collector contain polyethylene terephthalate as an additive, and in that said liquid cathode-electrolyte contains 0.01 to 0.5 weight percent of polyvinylchloride.

2. A nonaqueous electrochemical cell according to claim 1 wherein said glass fibre separator contains, as binders polyethylene terephthalate and an acrylic resin in a weight ratio of 1:0.5 through 1:1.5.

3. A nonaqueous electrochemical cell according to claim 1 or 2 wherein said cathode collector contains, as binders, polyethylene terephthalate and polytetrafluoroethylene in proportions 1 to 10 weight percent and 5 to 20 weight percent respectively, based on the total weight of the cathode.

4. A nonaqueous electrochemical cell according to claim 1, 2 or 3 wherein said liquid cathode-electrolyte contains 0.01 to 3.0 weight percent of polyethylene terephthalate.

5. A method of manufacturing a nonaqueous electrochemical cell consisting generally of an alkali metal anode, a glass fibre separator, a liquid cathode-electrolyte and a porous carbonaceous cathode collector, characterised in that said method either includes a step of incorporating 1 to 30 g/m² of polyethelene terephthalate in said glass fibre separator or includes a step of incorporating polyethylene terephthalate in said porous carbonaceous cathode collector in a proportion of 1 to 10 weight percent of the total weight of the cathode; and in that said method includes a step of adding 0.01 to 0.5 weight percent of polyvinyl chloride to the liquid cathode-electrolyte.

6. A method of manufacturing a nonaqueous electrochemical cell according to claim 5 including a step of incorporating, as binders in said glass fibre separator, polyethylene terephthalate and an acrylic resin in a weight ratio of 1:0.5 through 1:1.5.

7. A method of manufacturing a nonaqueous electrochemical cell according to claim 5 or 6, including a step of incorporating, as binders in said porous carbonaceous cathode collector, polyethylene terephthalate and polytetrafluoroethylene in proportions of 1 to 10 weight percent and 5 to 20 weight percent respectively, based on the total weight of the cathode.

8. A method of manufacturing a nonaqueous electrochemical cell according to claim 5, 6 or 7, including a step of adding polyethylene terephthalate at a concentration of 0.01 to 3.0 weight percent to the liquid cathode-electrolyte.

## Patentansprüche

1. Nichtwässrige elektrochemische Zelle umfassend eine Alkalimetallanode, ein Glasfasertrennelement, einen flüssigen Kathoden-Elektrolyt und einen porösen kohlenstoffhaltigen Kathodenkollektor, **dadurch gekennzeichnet, daß** das Glasfasertrennelement oder der Kathodenkollektor Polyethylenterephthalat als Additiv enthalten, und dadurch, daß der flüssige Kathoden-Elektrolyt 0,01-0,5 Gew.-% Polyvinylchlorid enthält.

2. Nichtwässrige elektrochemische Zelle nach Anspruch 1, worin das Glasfasertrennelement als Bindemittel Polyethylenterephthalat und ein Acrylharz in einem Gewichtsverhältnis von 1:0,5 bis 1:1,5 enthält.

3. Nichtwässrige elektrochemische Zelle nach Anspruch 1 oder 2, worin der Kathodenkollektor als Bindemittel Polyethylenterephthalat und Polytetrafluorethylen in Anteilen von 1-10 Gew.-% bzw. 5-20 Gew.-%, bezogen auf das Gesamtgewicht der Kathode, enthält.

4. Nichtwässrige elektrochemische Zelle nach Anspruch 1, 2 oder 3, worin der flüssige Kathoden-Elektrolyt 0,01-3,0 Gew.-% Polyethylenterephthalat enthält.

5. Verfahren zum Herstellen einer nichtwässrigen elektrochemischen Zelle, bestehend allgemein aus einer Alkalimetallanode, einem Glasfasertrennelement, einem flüssigen Kathoden-Elektrolyt und einem porösen kohlenstoffhaltigen Kathodenkollektor, **dadurch gekennzeichnet, daß** das Verfahren entweder den Schritt des Einarbeitens von 1-30 g/m² Polyethylenterephthalat in das Glasfasertrennelement umfaßt oder den Schritt des Einarbeitens von Polyethylenterephthalat in den porösen kohlenstoffhaltigen Kathodenkollektor in einem Anteil von 1-10 Gew.-% des Gesamtgewichts der Kathode umfaßt; und dadurch, daß das Verfahren den Schritt der Zugabe von 0,01-0,5 Gew.-% Polyvinylchlorid zu dem flüssigen Kathoden-Elektrolyt umfaßt.

6. Verfahren zum Herstellen einer nichtwässrigen elektrochemischen Zelle nach Anspruch 5, welches den Schritt des Einarbeitens von Polyethylenterephthalat und einem Acrylharz in einem Gewichtsverhältnis von 1:0,5 bis 1:1,5 als Bindemittel in das Glasfasertrennelement umfaßt.

7. Verfahren zum Herstellen einer nichtwässrigen elektrochemischen Zelle nach Anspruch 5 oder 6, welches den Schritt des Einarbeitens von Polyethylenterephthalat und Polytetrafluorethylen in Anteilen von 1-10 Gew.-% bzw. 5-20 Gew.-%, bezogen auf das Gesamtgewicht der Kathode, als Bindemittel in den porösen kohlenstoffhaltigen Kathodenkollektor umfaßt.

8. Verfahren zum Herstellen einer nichtwässrigen elektrochemischen Zelle nach Anspruch 5, 6 oder 7, welches den Schritt der Zugabe von Polyethylenterephthalat in einer Konzentration von 0,01-3,0 Gew.-% zu dem flüssigen Kathoden-Elektrolyt umfaßt.

## Revendications

1. Pile électrochimique non aqueuse comprenant une anode en métal alcalin, un séparateur en fibres de verre, un électrolyte de cathode liquide et un collecteur cathodique carboné poreux caractérisée en ce que ledit séparateur en fibres de verre ou ledit collecteur cathodique contient du poly(éthylène téréphtalate) en tant qu'additif et en ce que ledit électrolyte de cathode liquide contient de 0,01 à 0,5 pourcent en poids de poly(chlorure de vinyle)

2. Pile électrochimique non aqueuse selon la revendication 1, dans laquelle ledit séparateur en fibres de verre contient comme liants du poly(éthylène téréphtalate) et une résine acrylique dans un rapport massique de 1:0,5 à 1:1;5.

3. Pile électrochimique non aqueuse selon la revendication 1 ou 2, dans laquelle ledit collecteur cathodique contient comme liants du poly(éthylène téréphtalate) et du polytétrafluoroéthylène respectivement dans des proportions de 1 à 10 pourcent en poids et de 5 à 20 pourcent en poids ,rapportés au poids total de la cathode.

4. Pile électrochimique non aqueuse selon la revendication 1, 2 ou 3, dans laquelle ledit électrolyte de cathode liquide contient de 0,01 à 3,0 pourcent en poids de poly(éthylène téréphtalate).

5. Procédé de fabrication d'une pile électrochimique non aqueuse constituée généralement d'une anode en métal alcalin, d'un séparateur en fibres de verre, d'un électrolyte de cathode liquide et d'un collecteur cathodique carboné poreux, caractérisé en ce que ledit procédé soit comprend une étape consistant à incorporer de 1 à 30 g/m² de poly(éthylène téréphtalate) dans ledit séparateur en fibres de verre, soit comprend une étape consistant à incorporer du poly(éthylène téréphtalate) dans ledit collecteur cathodique carboné poreux dans une proportion de 1 à 10 pourcent en poids du poids total de la cathode; et en ce que ledit procédé comprend une étape consistant à ajouter de 0,01 à 0,5 pourcent en poids de poly(chlorure de vinyle) à l'électrolyte de cathode liquide.

6. Procédé de fabrication d'une pile électrochimique non aqueuse selon la revendication 5 comprenant une étape consistant à incorporer comme liants dans ledit séparateur en fibres de verre du poly(éthylène téréphtalate) et une résine acrylique dans un rapport massique del :0,5 à 1:1,5.

7. Procédé de fabrication d'une pile électrochimique non aqueuse selon la revendication 5 ou 6 comprenant une étape consistant à incorporer comme liants dans ledit collecteur cathodique carboné poreux du poly(éthylène téréphtalate) et du polytétrafluoroéthylène respectivement dans des proportions de 1 à 10 pourcent en poids et de 5 à 20 pourcent en poids rapportés au poids total de la cathode.

8. Procédé de fabrication d'une pile électrochimique non aqueuse selon la revendication 5, 6 ou 7 comprenant une étape consistant à ajouter du poly(éthylène téréphtalate) à une concentration de 0,01 à 3 pourcent en poids à l'électrolyte de cathode liquide.
